Europäisches Patentamt

European Patent Office

Office européen des brevets

(11) Veröffentlichungsnummer: **0 320 794**
**A2**

## (12) EUROPÄISCHE PATENTANMELDUNG

(21) Anmeldenummer: 88120513.2

(22) Anmeldetag: 08.12.88

(51) Int. Cl.⁴: **B60N 3/10**

(30) Priorität: **12.12.87 DE 8716427 U**

(43) Veröffentlichungstag der Anmeldung:
**21.06.89 Patentblatt 89/25**

(84) Benannte Vertragsstaaten:
**AT BE CH DE ES FR GB GR IT LI LU NL**

(71) Anmelder: **Heinrich Josef Winter**
**Kunststoffverarbeitung und Werkzeugbau**
**GmbH**
**Offenbacher Landstrasse 109**
**D-6452 Hainburg(DE)**

(72) Erfinder: **Winter, Heinrich Josef**
**Rathausgasse 6**
**D-6452 Hainburg(Hainstadt)(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) **Behälter zur Aufnahme von Gegenständen, insbesondere von Reiseproviant.**

(57) Es wird ein an einem Teil eines Kraftfahrzeuges anbringbarer Behälter (10) zur Aufnahme von Gegenständen beschrieben, wobei der Behälter (10) mindestens ein querabstehendes Befestigungsteil (36) zur Festlegung des Behälters (10) an einem Fenster des Kraftfahrzeuges aufweist.

EP 0 320 794 A2

## Behälter zur Aufnahme von Gegenständen , insbesondere von Reiseproviant

Die Erfindung betrifft einen an einem Teil eines Kraftfahrzeugs anbringbaren Behälter zur Aufnahme von Gegenständen, insbesondere von Reiseproviant.

Reiseproviant in Gestalt von Obst, Süssigkeiten, belegten Broten, Bier- oder Limonadendosen o.dgl. wird in Kraftfahrzeugen insbesonders während der Sommerzeit bei Urlaubsreisen z.B. in Kühltaschen gelagert, um den Reiseproviant auf einer niedrigen Temperatur zu halten. In solchen Kühltaschen bzw. Kühlbehältern ist der Reiseproviant zwar einigermassen geordnet untergebracht, derartige Kühltaschen bzw. -behälter benötigen jedoch einen nicht unerheblichen Platzbedarf, weshalb sie normalerweise nicht im Fahrgastraum sondern im Kofferraum des Kraftfahrzeuges untergebracht werden. Die Entnahme von Reiseproviant aus derartigen Kühltaschen bzw. Kühlbehältern ist dann jedoch nicht während der Fahrt möglich.

Reiseproviant der obengenannten Art wird oftmals jedoch auch ungeordnet im Fahrgastraum eines Kraftfahrzeuges gelagert, um ihn auch während der Fahrt griffbereit zu haben. Durch die ungeordnete Lagerung von Reiseproviant ergibt sich jedoch der Mangel, dass die Wahl eines bestimmten Produktes des Reiseproviants zeitaufwendig sein kann. Ausserdem ist die ungeordnete Lagerung des Reiseproviants an sich ein Mangel. Das gilt insbesondere für die Lagerung geöffneter Bier- oder Limonadendosen, die umfallen und ungewollt auslaufen können, was zu Verschmutzungen im Fahrgastraum eines Kraftfahrzeuges führt.

Der Erfindung liegt die Aufgabe zugrunde, einen Behälter der eingangs genannten Art zu schaffen, der an einem Kraftfahrzeug problemlos befestigbar und gut zugänglich ist.

Diese Aufgabe wird erfindungsgemäss dadurch gelöst, dass der Behälter ein quer abstehendes Befestigungsteil zur Festlegung des Behälters an einem Fenster des Kraftfahrzeugs aufweist. Das vom Behälter quer abstehende Befestigungsteil kann dabei beispielsweise einen Saugknopf aufweisen, mit dem der Behälter an einem Fenster des Kraftfahrzeugs befestigbar ist. Ein solchermassen ausgebildeter Behälter kann beispielsweise an einem Seitenfenster, am Heckfenster oder an der Windschutzscheibe eines Kraftfahrzeugs befestigt werden. Vorzugsweise wird ein derartig ausgebildeter Behälter an der Innenseite eines Fensters der zuletzt genannten Art befestigt.

Vorzugsweise ist das Befestigungsteil zur Festlegung des Behälters an einem unteren Rahmenabschnitt oder an der etwa horizontalen Oberkante eines Seitenfensters des Kraftfahrzeuges vorgesehen. In diesem Fall weist das Befestigungsteil vorzugsweise einen Einsteckschenkel und einen Verbindungsabschnitt auf, die zueinander annähernd senkrecht ausgerichtet sind und einen Haken bilden. Ein solcher Behälter kann mit seinem hakenförmigen Befestigungsteil entweder an einem unteren Rahmenabschnitt eines Seitenfensters des Kraftfahrzeuges oder an der etwa horizontalen Oberkante eines auf- und zumachbaren Seitenfensters des Kraftfahrzeugs befestigt werden. Der untere Rahmenabschnitt eines Seitenfensters des Kraftfahrzeugs ist entweder mit einer streifenförmigen Gummidichtung oder mit einer streifenförmigen Bürstendichtung ausgebildet, die ausreichend nachgiebig sind, um das hakenförmige Befestigungsteil mit seinem Einsteckschenkel in den unteren Rahmenabschnitt des Seitenfensters einzustecken. In diesem Fall weist das hakenförmige Befestigungsteil vorzugsweise ein Querschnittsprofil auf, das an die Verkleidung des Kraftfahrzeugs im unteren Rahmenabschnitt eines Seitenfensters des Kraftfahrzeugs angepasst ist. Durch eine derartige Ausbildung ergibt sich eine relativ feste unbewegliche Anordnung des Behälters an der zum unteren Rahmenabschnitt des Seitenfensters des Kraftfahrzeugs benachbarten Verkleidung. Es ist jedoch auch möglich, dass das hakenförmige Befestigungsteil ein Querschnittsprofil aufweist, das an die Wanddicke des auf- und zumachbaren Seitenfensters angepasst ist. Ein derartiger Behälter wird an der etwa horizontalen Oberkante eines Seitenfensters des Kraftfahrzeugs befestigt. Zu diesem Zweck wird das Seitenfenster geöffnet und der Behälter mit seinem hakenförmigen Befestigungsteil an der etwa horizontalen Oberkante des geöffneten Seitenfensters angehakt. Anschliessend kann das Seitenfenster bis auf einen kleinen Spalt, der durch den Verbindungsabschnitt des Befestigungsteils gegeben ist, wieder verschlossen werden.Selbstverständlich ist es auch möglich, das Seitenfenster des Kraftfahrzeugs geöffnet zu lassen, wenn dies die Aussentemperatur während einer Reise zulässt.

Der Einsteckschenkel des hakenförmigen Befestigungsteils weist vorzugsweise eine schneidenförmige Vorderkante auf. Eine solche Ausbildung des Behälters ist insbesondere dann vorteilhaft, wenn der Behälter, d.h. das hakenförmige Befestigungsteil des Behälters zur Befestigung des Behälters am unteren Rahmenabschnitt eines Seitenfensters des Kraftfahrzeugs vorgesehen ist. Durch die Ausbildung des Einsteckschenkels des hakenförmigen Befestigungsteils mit einer schneidenförmigen Vorderkante wird nämlich das Einstecken des Befestigungsteils in den mit einer streifenförmigen Gummidichtung bzw. mit einer streifenförmigen Bürstendichtung ausgebildeten unteren Rahmenabschnitt des Seitenfensters erleichtert und eine Beschädigung der Gummidichtung bzw. der Bürstendichtung verhindert.

Das hakenförmige Befestigungsteil steht vorzugsweise über die offene Oberseite des Behälters über. Auf diese Weise liegt der Behälter im am unteren Rahmenabschnitt eines Seitenfensters des Kraftfahrzeugs befestigten Zustands unter dem unteren Rahmenabschnitt des Seitenfensters, so dass durch den Behälter die Sicht durch das Seitenfenster nicht beeinträchtigt wird. Das gilt auch für einen mit Reiseproviant gefüllten Behälter, wenn der im Behälter angebrachte Reiseproviant nicht zu hoch ist.

Das Befestigungsteil ist mit dem Behälter vorzugsweise einstückig verbunden. Der erfindungsgemässe Behälter besteht nämlich vorzugsweise aus einem Kunststoffmaterial,das mit einer Thermo-, Spritz- oder Spritzpressvorrichtung verarbeitet werden kann.

Es hat sich als zweckmässig erwiesen, dass beim erfindungsgemässen Behälter mindestens zwei auf ihrer Oberseite offene Aufnahmeteile nebeneinander vorgesehen sind, wobei mindestens ein Aufnahmeteil einen einer Bier-bzw. Limonadendose entsprechenden Innenquerschnitt aufweist und mindestens ein anderes Aufnahmeteil wannenförmig ausgebildet ist. Das wannenförmige Aufnahmeteil ist beispielsweise zur Aufnahme einer Pakkung Süssigkeiten, zur Aufnahme von Obst, zur Aufnahme von Schokoladeriegeln o.dgl. geeignet. Im zuerst genannten Aufnahmeteil kann eine Bier- oder Limonadendose, die beispielsweise ein Volumen von 0,33 1 aufweist, unverschiebbar gehalten werden, so dass auch bei geöffneter angebrauchter Dose die Gefahr eines Ausrinnenes eliminiert ist.

Die Aufnahmeteile sind vorzugsweise gleich hoch. Dadurch sind die Aufnahmeteile des erfindungsgemässen Behälters gleich gut zugänglich.

Die Aufnahmeteile sind an ihrer offenen Oberseite vorzugsweise durch ein Verbindungselement miteinander verbunden, und es sind vorzugsweise mindestens zwei in die gleiche Richtung weisende hakenförmige Befestigungsteile vorgesehen, die mit dem Verbindungselement einteilig verbunden sind. Durch das Verbindungselement zwischen den Aufnahmeteilen wird die mechanische Stabilität des Behälters verbessert.

Es hat sich als vorteilhaft erwiesen, dass das/jedes Aufnahmeteil für eine Bier- bzw. Limonadendose in seiner Seitenwand eine Ausnehmung aufweist. Durch eine derartige Ausbildung des Behälters ist es möglich, die im Aufnahmeteil befindliche Dose problemlos aus dem Aufnahmeteil zu entnehmen. Dazu ist es nur erforderlich, durch die Ausnehmung zur Dose zu greifen und die Dose zur offenen Oberseite des Aufnahmeteiles hochzuschieben.

Die Ausnehmung erstreckt sich vorzugsweise bis zum Boden des für eine Bier- bzw. Limonadendose vorgesehenen Aufnahmeteils. Durch eine solche Ausbildung der Ausnehmung ist einerseits die Entnahme der Dose aus dem Aufnahmeteil weiter vereinfacht und andererseits der Boden des Aufnahmeteils problemlos von Flüssigkeitsresten zu reinigen.

Der Behälter besteht vorzugsweise aus einem schlagfesten Kunststoffmaterial. Bei diesem Kunststoffmaterial handelt es sich vorzugsweise um Polystyrol. Selbstverständlich ist es jedoch auch möglich, den Behälter aus einem anderen Kunststoffmaterial herzustellen.

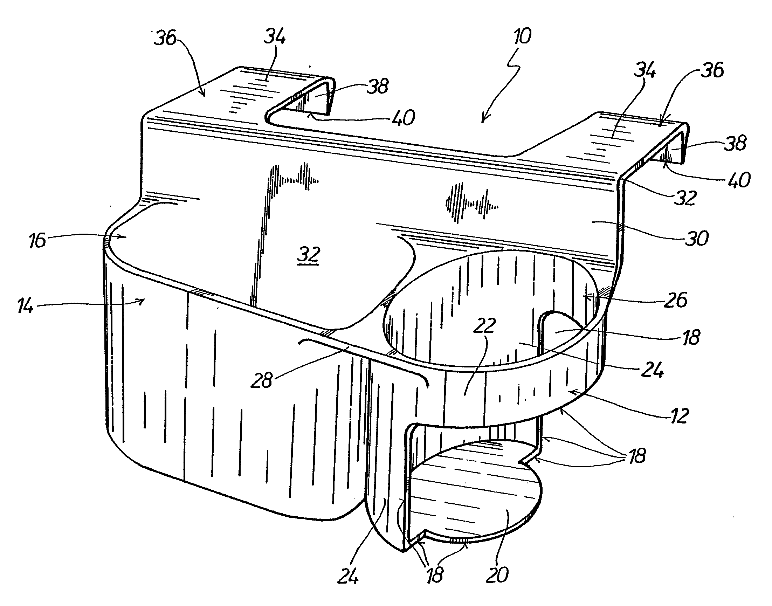

Weitere Einzelheiten, Merkmale und Vorteile ergeben sich aus der nachfolgenden Beschreibung eines in der Zeichnung dargestellten Ausführungsbeispieles des erfindungsgemässen, an einem Teil eines Kraftfahrzeugs anbringbaren Behälters zur Aufnahme von Gegenständen, insbesondere von Reiseproviant.

In der Figur ist in einer räumlichen Darstellung der Behälter 10 mit einem Aufnahmeteil 12 für eine Bier- bzw. Limonadendose und mit einem Aufnahmeteil 14 für Obst, Süssigkeiten, Schokoladenriegel, Waffeln, o.dgl. dargestellt. Das Aufnahmeteil 14 ist wannenförmig ausgebildet und an seiner Oberseite 16 offen. Das Aufnahmeteil 12 weist einen lichten Innenquerschnitt auf, der dem Querschnitt einer genormten 0.33 1 Bier- bzw. Limonadendose entspricht. Das Aufnahmeteil 12 ist mit einer Ausnehmung 18 ausgebildet, die sich bis zum Boden 20 des Aufnahmeteils 12 erstreckt. Die Ausnehmung 18 ist auf der Oberseite durch einen Bund 22, seitlich durch die Mantelfläche 24 und auf der Unterseite durch den Boden 20 des Aufnahmeteils 12 begrenzt. Das Aufnahmeteil 12 ist wie das Aufnahmeteil 14 auf seiner Oberseite 26 offen. Das Aufnahmeteil 12 und das Aufnahmeteil 14 sind gleich hoch und an ihrer Oberseite durch ein Verbindungselement 28 miteinander verbunden. Das Verbindungselement 28 ist mit einer Rückenfläche 30 des Behälters 10 einteilig verbunden, wobei das Verbindungselement 28 und die Rückenfläche 30 aufeinander mindestens annähernd senkrecht stehen. Mit der Rückenfläche 30 fluchtet die Rückwand 32 des wannenförmigen Aufnahmeteils 14 und mindestens eine Mantellinie des zylindrischen Aufnahmeteils 12. Von der oberen Kante 32 der Rückenfläche 30 steht mindestens annähernd senkrecht je ein Verbindungsabschnitt 34 eines Befestigungsteile 36 weg, das einen Einsteckschenkel 38 mit einer schneidenförmigen Vorderkante 40 aufweist. Der Einsteckschenkel 38 steht vom zugehörigen Verbindungsabschnitt 34 mindestens annähernd senkrecht weg, so dass sich je ein hakenförmig ausgebildetes Befestigungsteil 36 ergibt. Die beiden seitlich vorgesehenen Befestigungsteils 36 sind auf der von den Aufnahmeteilen 12 und 14 abgewandten Seite der Rückenfläche 30 vorgesehen. Mit den hakenförmigen Befestigungsteilen 36 kann der Behälter 10 beispielsweise am unteren Rahmenabschnitt eines Seitenfensters eines Kraftfahrzeugs befestigt werden. Durch die Befestigung des Behälters 10 wird die Öffenbarkeit bzw. die Verschliessbarkeit des Seitenfensters des Kraftfahrzeugs nicht beeinträchtigt.

**Ansprüche**

1. An einem Teil eines Kraftfahrzeugs anbringbarer Behälter (10) zur Aufnahme von Gegenständen, insbesondere von Reiseproviant,
**dadurch gekennzeichnet,**
dass der Behälter (10) mindestens ein querabstehendes Befestigungsteil (36) zur Festlegung des Behälters (10) an einem Fenster des Kraftfahrzeugs aufweist.

2. Behälter nach Anspruch 1
**dadurch gekennzeichnet,**
dass das Befestigungsteil (36) zur Festlegung des Behälters (10) an einem unteren Rahmenabschnitt oder an der etwa horizontalen Oberkante eines Seitenfensters des Kraftfahrzeugs vorgesehen ist.

3. Behälter nach Anspruch 1,
**dadurch gekennzeichnet,**
dass das Befestigungsteil (36) einen Einsteckschenkel (38) und einen Verbindungsabschnitt (34) aufweist, die zueinander mindestens annähernd senkrecht ausgerichtet sind und einen Haken bilden.

4. Behälter nach Anspruch 3,
**dadurch gekennzeichnet,**
dass das hakenförmige Befestigungsteil (36) ein Querschnittsprofil aufweist, das an die Verkleidung des Kraftfahrzeugs am unteren Rahmenabschnitt eines Seitenfensters des Kraftfahrzeugs angepasst ist.

5. Behälter nach Anspruch 3 oder 4,
**dadurch gekennzeichnet,**
dass der Einsteckschenkel (38) des hakenförmigen Befestigungsteils (36) eine schneidenförmige Vorderkante (40) aufweist.

6. Behälter nach einem der Ansprüche 3 bis 5,
**dadurch gekennzeichnet,**
dass das hakenförmige Befestigungsteil (36) über die offene Oberseite (16, 18) des Behälters (10) übersteht.

7. Behälter nach einem der vorhergehenden Ansprüche
**dadurch gekennzeichnet,**
dass das Befestigungsteil (36) mit dem Behälter (10) einstückig verbunden ist.

8. Behälter nach einem der vorhergehenden Ansprüche,
**dadurch gekennzeichnet,**
dass mindestens zwei auf ihrer Oberseite (16,26) offene Aufnahmeteile (12, 14) nebeneinander vorgesehen sind, wobei mindestens ein Aufnahmeteil (12) einen einer Bier- bzw. Limonadendose entsprechenden Innenquerschnitt aufweist und mindestens ein anderes Aufnahmeteil (14) wannenförmig ausgebildet ist

9. Behälter nach Anspruch 8,
**dadurch gekennzeichnet,**
dass die Aufnahmeteile (12, 14) gleich hoch sind.

10. Behälter nach Anspruch 8 oder 9,
**dadurch gekennzeichnet,**
dass die Aufnahmeteile (12, 14) an ihrer offenen Oberseite (16,26) durch ein Verbindungselement (28) miteinander verbunden sind, und dass mindestens zwei in die gleiche Richtung weisende hakenförmige Befestigungsteile (36) vorgesehen sind, die mit dem Verbindungselement (28) einteilig verbunden sind.

11. Behälter nach einem der Ansprüche 8 bis 10,
**dadurch gekennzeichnet,**
dass das/jedes Aufnahmeteil (12) für eine Bier- bzw. Limonadendose in seiner Seitenwand eine Ausnehmung (18) aufweist.

12. Behälter nach Anspruch 11,
**dadurch gekennzeichnet,**
dass die Ausnehmung (18) sich bis zum Boden (20) des für eine Bier- bzw. Limonadendose vorgesehenen Aufnahmeteils (12) erstreckt.

13. Behälter nach einem der vorhergehenden Ansprüche,
**dadurch gekennzeichnet,**
dass er (10) aus einem schlagfesten Kunststoffmaterial ist.